# EUROPÄISCHE PATENTSCHRIFT

(11) **EP 1 231 995 B1**
(45) Veröffentlichungstag und Bekanntmachung des Hinweises auf die Patenterteilung: **14.04.2004**
(21) Anmeldenummer: 00977505.7
(22) Anmeldetag: 08.11.2000
(51) Int. Cl.: B01D 25/21, B01D 25/30

(54) **FILTERPLATTE EINER FILTERPRESSE**
FILTER PLATE OF A FILTER PRESS
PLAQUE FILTRANTE D'UN FILTRE-PRESSE

(30) Priorität: 25.11.1999 DE 19956617
(43) Veröffentlichungstag der Anmeldung: 21.08.2002
(73) Patentinhaber: Outokumpu Oyj, 02201 Espoo (FI)
(72) Erfinder: GRAFEN, Karl, 52146 Würselen (DE); SPÖLGEN, Hermann-Josef, 52379 Langerwehe (DE)
(74) Vertreter: Bauer, Dirk, Dipl.-Ing. Dipl.-Kfm.
(86) Internationale Anmeldenummer: PCT/EP2000/011012
(87) Internationale Veröffentlichungsnummer: WO 2001/037964

(56) Entgegenhaltungen:
- EP-A- 0 852 962
- DE-A- 2 920 064
- DE-C- 99 530
- GB-A- 645 586
- PATENT ABSTRACTS OF JAPAN vol. 011, no. 394 (C-465), 23. Dezember 1987 (1987-12-23) & JP 62 155909 A (NORITAKE TEKKOSHO:KK), 10. Juli 1987 (1987-07-10)

## Beschreibung

Die Erfindung betrifft eine Filterpresse zur Filtration von Suspensionen, bei der eine Mehrzahl von parallel zueinander verschiebbar angeordneten Filterplatten in einer Filtrationsstellung zu einem Paket zusammenpreßbar ist, das zwischen jeweils zwei Filterplatten eine mit mindestens einem Filtertuch versehene Filterkammer aufweist, und bei der die Filterplatten in einer Austragsstellung um einen Entleerungsabstand voneinander entfernbar sind, wobei jeder Filterkammer mindestens ein Befüllelement zur Zuführung von Suspension in die Filterkammer zugeordnet ist.

Eine Filterpresse mit derartigen Filterplatten ist beispielsweise aus der EP 0 540 705 B 1 bekannt. Die Befüllelemente sind hierbei jeweils als stabförmige Rohrkörper ausgebildet, die in eine randseitige, in Richtung des Dichtrandes verlaufende, nutförmige Ausnehmung des Dichtrandes abdichtend eingelegt werden. Zwischen der Ausnehmung und der Filterkammer verläuft ein Dichtrand, der quer zu seiner Erstreckung mit Queröffnungen versehen ist, die mit Trübeaustrittsöffnungen des Rohrkörpers korrespondieren. Auf diese Weise wird eine Strömungsverbindung zwischen dem Rohrkörper und der Filterkammer geschaffen.

Derartige Befüllelemente sind insbesondere dann von Vorteil, wenn ein zickzackförmig um die Filterplatten verlaufendes Endlosfilterband verwendet werden soll. Nachteile dieser Konstruktion sind jedoch darin zu sehen, daß die Befüllelemente den Dichtrand der Filterkammern durchdringen und daher - insbesondere bei hohen Drücken - unter Umständen zu Dichtigkeitsproblemen führen können. Des weiteren ist außerhalb des Filterplattenpakets eine separate Versorgungsleitung für die Suspensionszuführung sowie eine Vielzahl von Verbindungsleitungen zwischen der Versorgungsleitung und den Befüllelementen erforderlich. Schließlich sind auch noch besondere Vorkehrungen für die Lagerung der Befüllelemente zu treffen, die sich ungefähr mittig im Zwischenraum zwischen zwei Filterplatten befinden, wenn diese auf den Entleerungsabstand voneinander entfernt wurden.

Eine alternative Art der Suspensionszuführung besteht in einem sogenannten zentralen Trübezulauf, der sich mittig innerhalb des Plattenspiegels befindet und von einer der Zahl der einzelnen Filterplatten entsprechenden Anzahl von Durchgangsöffnungen in den Filterplatten gebildet wird. In der Filtrationsstellung des Filterplattenpakets sind die Durchgangsöffnungen zu einem an den Verbindungsstellen abgedichteten zentralen Zulaufkanal zusammengesetzt, von dem aus die Trübe in die einzelnen Filterkammern eintreten kann.

Nachteilig tritt bei dieser Bauweise in Erscheinung, daß die wirksame Filterfläche und das Kammervolumen durch die Durchgangsbohrungen in den Filterplatten vermindert wird und daß bei einer Formveränderung der Filterplatten im Zuge einer ungleichmäßigen Druckbeaufschlagung die Zufuhrquerschnitte für die einzelnen Kammern verändert werden, wodurch sich Unterschiede in der Druckbeaufschlagung benachbarter Kammern weiter verstärken können.

Außerdem sind sogenannte Eckeinläufe als weitere Art der Suspensionszuführung allgemein bekannt. Die Eckbereiche der Filterplatten sind hierbei mit miteinander fluchtenden Durchgangsöffnungen versehen, die im zusammengepreßten Zustand des Pakets einen ecknah verlaufenden und innerhalb des Dichtrandes der Filterplatte angeordneten Trübekanal bilden. Vorteilhaft gegenüber einem zentralen Trübeeinlauf ist es hierbei anzusehen, daß die Membranbewegung weder durch Stütznocken noch durch die zentrale Membranverklammerung im Einlaufbereich beeinträchtigt wird. Auch kann sich der Zulaufquerschnitt der Suspension nicht durch eine Plattenverformung verändern, weshalb eine gleichmäßigere Befüllung und ein gleichmäßigerer Druckaufbau als beim Zentraleinlauf möglich ist.

Ein Nachteil des Eckeinlaufs besteht darin, daß die Filtertücher beispielsweise mit Hilfe schraubbarer Klemmringe im Einlaufbereich mit der Filterplatte verklammert werden müssen. Hieraus resultiert zum einen ein vergleichsweise großer Arbeitsaufwand beim Auswechseln der Filtertücher. Zum andern schließt eine derartige Filtertuchfestlegung an der Filterplatte auch die Möglichkeit aus, ein Filtertuch mit Hilfe eines verfahrbaren Walzenpaares abzureinigen, um das das Filtertuch S-förmig verläuft. Eine derartige Möglichkeit der Filterkuchenentfemung ist aus der DE 195 46 701 A1 sowie der DE 197 45 289 C1 bekannt.

Aus der EP 0 852 962 A1 ist eine Filterplatte bekannt, die im Verbund mit Membranfilterplatten eingesetzt wird. Zur Abstützung der Membrane im Bereich des Trübeeinlaufs ist ein Stützelement vorgesehen, das aus einzelnen Stegen besteht. Um zu vermeiden, dass während des Nachpressens von der Membran hervorgerufene Materialverdichtungen zwischen den Stegen in aufwendiger Art und Weise herausgearbeitet werden müssen, erweitert sich der Einlassteil des Trübezulaufs in Strömungsrichtung der Trübe. Zusätzlich dazu stehen die Stege auf einem keilförmigen Quersteg, der in Richtung der Filterplatte ansteigend keilförmig geformt ist. Aufgrund der vorbekannten Gestaltung sollen sich Materialverdichtungen automatisch beim nächsten Füllvorgang durch den Förderstrom unter dem Druck der Förderpumpe lösen.

Die DE 99 530 C beschreibt eine Abdichtung von Filtertüchern in Filterpressen. Der Trübezulauf befindet sich bei den in diesem Dokument beschriebenen Filterplatten in der Ecke des Filterspiegels und führt so zu einer Einbuße an aktiver Filterfläche, d.h. zu einer Reduzierung der Filterleistung. Des Weiteren befindet sich der Einlauf im Bereich des Filtertuchs, das zu diesem Zweck im Bereich des Zulaufs mit einer ungefähr kreisförmigen Öffnung versehen ist. Um zu verhindern, dass die Trübe ungefiltert auf die Filtratseite des Filtertuchs gelangt, ist eine besondere Abdichtung im Bereich des Trübezulaufs erforderlich. Bei der bekannten Filterplatte wird die Abdichtung durch durch Stege fest miteinander verbundene Scheibenringe bewirkt, die jeweils in den Kontaktflächen mit Gummiringen versehen sind. Um diesen Doppelring während des Öffnens und Schließens des Plattenpakets auf den Lochrändem festzuhalten, wird er mittels eines angegossenen Rohrstücks in den Zufuhrkanal jeder Platte gesteckt. Als Nachteil ist in diesem Fall sowohl die Durchdringung des Filtertuchs, als auch der Verlust der aktiven Filterfläche im Bereich des Zulaufs anzusehen.

Ferner ist aus der DE 29 20 064 A1 noch ein Filtriergerät zum Filtrieren von Flüssigkeiten bekannt. Bei diesem insbesondere zur Filtration von Getränken vorgesehenen Vorrichtung besitzen die Filterplatten jeweils eine in der Zulauf- bzw. Ablaufleitung liegende Durchgangsöffnung, die über einen in der Plattenebene verlaufenden Durchtritt mit einer der beiden Oberflächen der Filterplatte verbunden ist. An jeder Plattenoberfläche steht ein umlaufender Dichtflansch vor, zwischen dem und dem zugewandten Dichtflansch der benachbarten Filterplatte die zugehörige Filterschicht verspannt ist. Um eine Ansammlung von Luft sowie ausfiltrierten Teilchen in Eckbereichen der Dichtflansche zu vermeiden, bildet die Innenwand des Dichtflansches in der Draufsicht gesehen eine Kurve mit einem unteren und einem oberen Scheitelpunkt. Im Bereich dieser Scheitelpunkte sind die Zulauf- bzw. Ablaufleitung angeordnet, wobei die Innenwand des Dichtflansches im Bereich zwischen den beiden Scheitelpunkten stets zur Horizontalen geneigt verläuft. Auch bei dieser vorbekannten Filterplatte geht die Anordnung der Zulaufleitung somit zu Lasten der aktiv nutzbaren Filterfläche.

Der Erfindung liegt die Aufgabe zugrunde, eine Filterpresse vorzuschlagen, deren Befülleinrichtung nicht den sensiblen Bereich des Dichtrandes der Filterplatte durchdringt, die außerhalb des eigentlichen Filterspiegels angeordnet ist und ohne Klemmringe eine Abdichtung eines lose an der Filterplatte anliegenden Filtertuchs im zusammengepreßten Zustand des Pakets ermöglicht. Auf außerhalb der Filterplatten verlaufende Versorgungsleitungen und davon ausgehende Verbindungsleitungen soll verzichtet werden.

Ausgehend von einer Filterpresse der eingangs beschriebenen Art, wird diese Aufgabe erfindungsgemäß dadurch gelöst, daß das Befüllelement an einem sich außerhalb eines Plattenspiegels erstreckenden Ansatzstück und innerhalb eines an den Filterplatten umlaufenden Dichtrands angeordnet und mit einer Filterplatte verbindbar ist, wobei in der Filtrationsstellung die Befüllelemente einen sich durch das Paket der Filterplatten erstreckenden Zulaufkanal für die Suspension bilden und dichtend zwischen benachbarten Filterplatten eingeklemmt sind.

Die erfindungsgemäße Ausbildung der Befüllelemente schafft die Voraussetzungen für möglichst große Filtrationsleistungen, da der eigentliche Plattenspiegel frei von jeglichen Einbauten für die Suspensionszuführung gehalten wird. Weil sich die Befüllelemente vollständig innerhalb des umlaufenden Dichtrandes befinden, sind auch bei großen Kammerdrücken keine Undichtigkeiten zu befürchten. Da die Befüllelemente zusammen einen sich innerhalb des Plattenpakets befindlichen Zulaufkanal bilden, sind separate Versorgungsleitungen, die sich außerhalb des Plattenpakets parallel zu diesem erstrecken, sowie von dort aus ausgehende Verbindungsleitungen zu den einzelnen Filterkammern nicht erforderlich. Die Filterpressen, bei denen die Filterplatten gemäß der Erfindung verwendet werden, lassen sich daher insofern kostengünstig herstellen und sind außerdem wartungs- und verschleißarm.

Ähnlich wie bei einem Eckeinlauf bewirken auch die Befüllelemente der erfindungsgemäßen Filterpresse infolge ihres gleichbleibenden Zuführungsquerschnitts eine sehr gleichmäßige Druckbeaufschlagung der Filterkammern und somit auch eine Verringerung der Gefahr stärkerer Durchbiegungen des Filterplattenspiegels.

Außerdem läßt sich zumindest ein Filtertuch unbefestigt an der Filterplatte zwischen dieser und dem Befüllelement dichtend einklemmen, so daß nach einem Entfernen benachbarter Filterplatten auf den Entleerungsabstand eine mit einem Walzenpaar versehene Kuchenaustragsvorrichtung das Filtertuch über den gesamten Plattenspiegel abfahren kann, was für eine vollständige Entfernung des Filterkuchens notwendig ist.

Sofern das Filterplattenpaket abwechselnd aus sogenannten Membranplatten mit jeweils einer Membran auf jeder Seite und sogenannten Kammerplatten ohne Membranen zusammengesetzt ist, weisen vorzugsweise die Membranplatten auf gegenüberliegenden Seiten jeweils ein Befüllelement auf, das jeweils das membranplattenseitige Filtertuch abdichtend durchdringt.

Gemäß einer Ausgestaltung der Filterplatte ist vorgesehen, daß das Befüllelement aus einem zylinderförmigen und den Zulaufkanal bildenden Zentralteil und einem sich rechtwinklig zu dessen Längsachse erstreckenden Flanschteil besteht, das mit strahlenförmig von dem Zulaufkanal ausgehenden und in die Filterkammer mündenden Abzweigkanälen versehen ist.

Es besteht die Möglichkeit, daß das Flanschteil wenigstens teilweise sowohl in eine Aussparung in der Filterplatte, mit der es verbindbar ist, als auch in eine Aussparung in der gegenüberliegenden Filterplatte eingreift.

Ist das Flanschteil mit seiner gesamten Dicke in die Kammerplatte eingebettet, so ergibt sich eine wesentliche Vereinfachung der Membranausführung.

Die Erfindung weiter ausgestaltend, wird vorgeschlagen, daß eine Aufnahmebohrung für das Befüllelement in der Filterplatte mit einer Nut versehen ist, die mit einer Nut in dem Befüllelement in dessen eingesetztem Zustand korrespondiert, wobei in eine der Nuten ein das Befüllelement formschlüssig mit der Filterplatte verbindender Dichtungsring eingesetzt ist.

Bei einer derartigen Ausführung erfüllt der Dichtungsring eine Doppelfunktion, indem er zum einen einen Eintritt der Suspension in Bereiche hinter das Filtertuch der Membranplatte vermeidet und zum anderen für eine formschlüssige Verbindung des Befüllelements mit der Filterplatte sorgt, wobei diese Verbindung aufgrund der Elastizität des vorzugsweise gummiartigen Dichtungsrings ohne Zuhilfenahme von Werkzeugen aufhebbar ist (Schnapp-Verschluß). Im Vergleich mit geschraubten Klemmringen für die Filtertücher läßt sich hierdurch bei einem Wechselvorgang eine nicht unerhebliche Zeitersparnis realisieren.

Außerdem entfällt mit Rücksicht auf die chemische Beständigkeit der Einsatz von Sonderwerkstoffen für eine Schraubverbindung.

Wenn eine der Filterkammer zugewandte Stirnseite des Flanschteils derart geneigt verläuft, daß die Membran im aufgeblähten Zustand daran stetig abgestützt ist, wird die Gefahr einer Überbeanspruchung des Membranmaterials, wie sie im Falle unstetiger Übergänge mit scharfen Kanten bestünde, ausgeschlossen.

Außerdem wird noch vorgeschlagen, die Filterplatte, mit der das Befüllelement nicht verbunden ist, mit einer eine Durchgangsbohrung umgreifenden Nut zu versehen, in die ein Dichtungsring einlegbar ist, gegen den das Flanschteil in der Filtrationsstellung preßbar ist.

Mit Hilfe eines derartigen Dichtungsrings läßt sich auch ein Filtertuch, das unbefestigt an einer Kammerplatte anliegt, zwischen dieser und der zugewandten Oberfläche des Befüllelements abdichten. Hierdurch wird verhindert, daß Suspension aus dem Zufuhrkanal in Bereiche zwischen dem Filtertuch und der Kammerplatte gelangt.

Eine weitere Ausgestaltung der Erfindung besteht darin, daß das Zentralteil sich außerhalb der Membran befindet und die Filterplatte mit einer sich um die Durchgangsbohrung erstreckenden Manschette versehen ist, die in der Filtrationsstellung des Plattenpakets von dem Flanschteil des Befüllelements elastisch komprimierbar ist.

Da bei dieser Konstruktion auf eine Durchdringung der Membran durch das Zentralteil des Befüllelements verzichtet werden kann, läßt sich die Membran einfacher und daher kostengünstiger herstellen. Die vorzugsweise gummielastisch komprimierbare Manschette führt zu einer sicheren Abstützung des Befüllelements in der Filtrationsstellung.

Schließlich wird noch vorgeschlagen, daß ein Dichtwulst der Membran in der Filtrationsstellung des Plattenpakets ebenfalls von dem Flanschteil des Befüllelements elastisch komprimierbar ist. Hierdurch kann auch im Bereich des Befüllelements eine sichere Abdichtung der Membran zum Plattengrundkörper erreicht werden.

Die Erfindung wird nachfolgend anhand der Ausführungsbeispiele der erfindungsgemäßen Filterplatte näher erläutert. Es zeigt:
- Fig. 1: die rechte Hälfte einer ersten Ausführungsform einer Membranplatte mit eingesetztem Befüllelement sowie der im Abstand dazu angeordneten linken Hälfte einer Kammerplatte, jeweils im Längsschnitt eines oberen Teils der Platten;
- Fig. 2: wie Fig. 1, jedoch in aneinandergepreßtem Zustand beider Filterplatten;
- Fig. 3: einen Ausschnitt einer Vorderansicht der Membranplatte mit dem eingesetzten Befüllelement;
- Fig. 4: wie Fig. 1, jedoch mit einem alternativ angeordneten Befüllelement
- Fig. 5: wie Fig. 4, jedoch im aneinandergepreßten Zustand beider Filterplatten und
- Fig. 6: eine Vorderansicht einer Membranplatte.

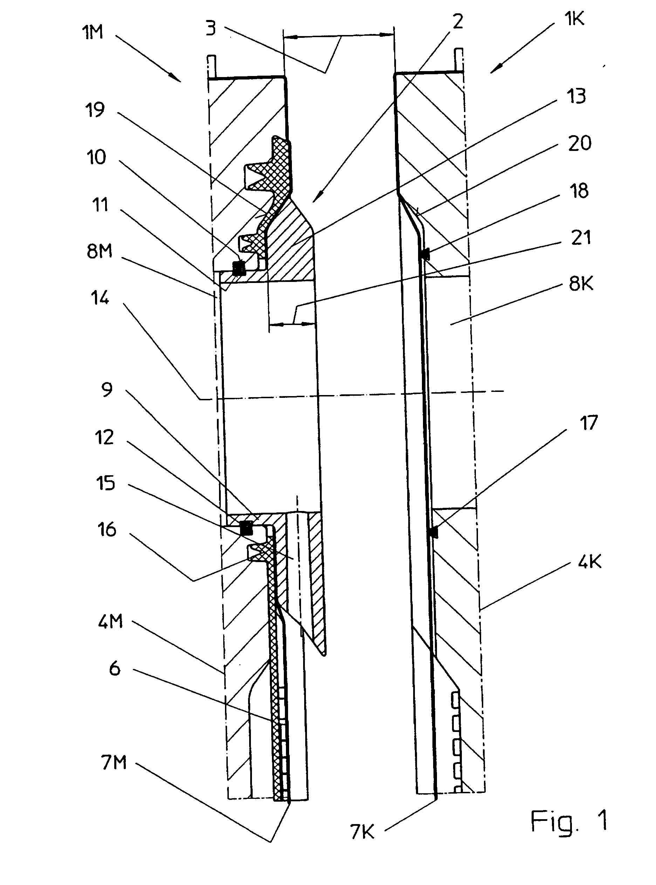

Fig. 1 zeigt in der linken Teilfigur in einem Längsschnitt die rechte Hälfte einer als Membranplatte 1M ausgeführten Filterplatte im Bereich eines darin eingesetzten Befüllelements 2. Die rechte Teilfigur der Fig. 1 zeigt eine um einen Entleerungsabstand 3 von der Membranplatte 1M entfernt angeordnete Kammerplatte 1K, und zwar lediglich deren linke Hälfte. Sowohl die Membranplatte 1M als auch die Kammerplatte 1K sind symmetrisch in bezug auf ihre Symmetrieebenen 4M und 4K aufgebaut. Der Einfachheit halber sind die einander abgewandten und identisch ausgebildeten Hälften der beiden dargestellten Filterplattenabschnitte weggelassen. Des weiteren zeigen die Längsschnitte gemäß Fig. 1 lediglich den obersten Abschnitt der vertikal ausgerichteten Filterplatten 1M und 1K, und zwar im Bereich eines Ansatzstücks 5, das sich oberhalb einer Plattenkante 5' erstreckt, welche einen im wesentlichen rechteckigen Plattenspiegel der Filterplatte 1M nach oben begrenzt.

In einer in ihrer Gesamtheit nicht gezeigten Filterpresse ist eine Mehrzahl von Filterplatten 1M und 1K in Form eines Pakets horizontal verschiebbar hintereinander angeordnet, wobei auf eine auf jeder Seite mit einer Membran 6 und einem Filtertuch 7M versehene Membranplatte 1M abwechselnd eine beidseitig jeweils mit lediglich einem Filtertuch 7K (und keiner Membran) versehene Kammerplatte 1K folgt.

In eine durchgängige Durchgangsbohrung 8M in der Membranplatte 1M ist ein zylinderförmiges Zentralteil 9 des Befüllelements 2 eingesteckt. Zur Erzielung eines Formschlusses zwischen dem Befüllelement 2 und der Membranplatte 1M sind beide vorgenannten Bauteile jeweils mit einer miteinander korrespondierenden Nut 10 und 11 versehen, wobei in die tiefere Nut 10 in der Membranplatte 1M vor der Montage des Befüllelements 2 ein gummielastischer Dichtungsring 12 eingesetzt ist, der mit seinem vorstehenden Bereich ― einem Schnapp-Verschluß entsprechend - in die flachere Nut 11 in dem Befüllelement 2 eingreift, sobald dieses seine Endposition erreicht hat.

Das Befüllelement 2 weist des weiteren ein rechtwinklig zur Längsachse des Zentralteils 9 ausgerichtetes Flanschteil 13 auf, das mit mehreren strahlenförmig von der Längsachse 14 des Zentralteils 9 ausgehenden Abzweigkanälen 15 versehen ist.

Mit Hilfe des Flanschteils 13 wird sowohl das mit einem Durchbruch im Bereich des Befüllelements 2 versehene Filtertuch 7M als auch die ebenfalls mit einem vergleichbaren Durchbruch versehene Membran 6 an der Membranplatte 1M befestigt. Der Durchbruch in der Membran 6 wird von einem umlaufenden Dichtwulst 16 begrenzt, der in eine angepaßte Nut eingreift.

Die Kammerplatte 1 K ist mit einer die Durchgangsbohrung 8K umgreifenden und hinterschnittenen Nut 17 versehen, in die ein Dichtungsring 18 eingelegt ist. An diesem stützt sich das Filtertuch 7K ab, das im Bereich der Durchgangsbohrung 8K ebenfalls mit einer angepaßten (im Durchmesser ein wenig größeren) Öffnung versehen ist.

Sowohl die Membranplatte 1M als auch die Kammerplatte 1 K sind in Bereichen um die Aufnahme- bzw. Durchgangsbohrung 8M, 8K mit jeweils einer muldenförmigen Aussparung 19, 20 versehen, die vorzugsweise eine identische Tiefe aufweisen und in der Summe der Dicke 21 des Flanschteils 13 entsprechen.

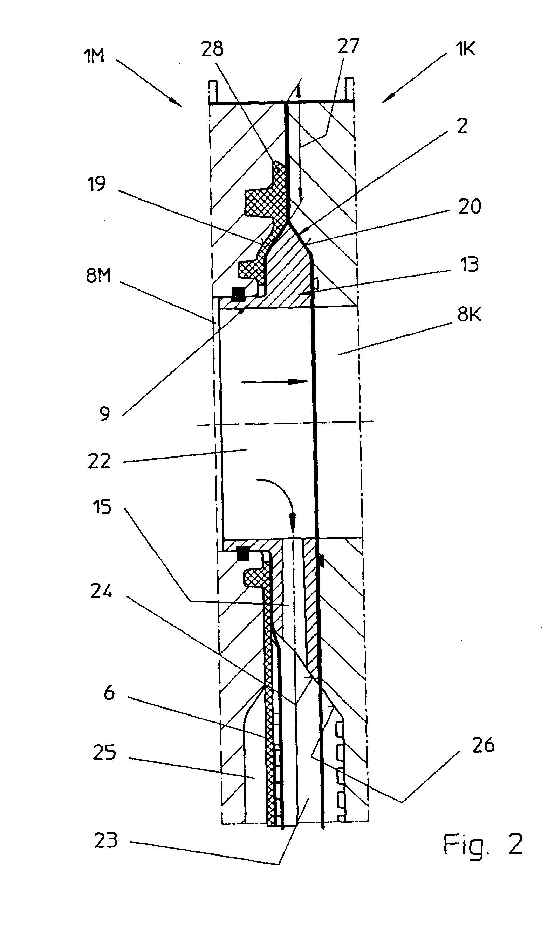

Aus Fig. 2 wird ersichtlich, wie das Flanschteil 13 des Befüllelements 2 von den beiden Ausnehmungen 19 und 20 vollständig aufgenommen wird, wenn die beiden Filterplatten 1M und 1K in der dort abgebildeten Filtrationsstellung beispielsweise mit Hilfe einer hydraulischen Schließeinrichtung aneinandergepreßt sind. Die koaxial zu der Durchgangsbohrung 8K in der Kammerplatte 1K ausgerichtete Durchgangsbohrung 8M in der Membranplatte 1M bildet zusammen mit dem in letztere eingesetzten Befüllelement 2 bzw. dessen Zentralteil 9 einen durchgängigen Zulaufkanal 22, von dem die Abzweigkanäle 15 ausgehen und jeweils in eine zwischen einer Membranplatte 1M und einer Kammerplatte 1K befindliche Filterkammer 23 einmünden.

Wie sich aus Fig. 2 ergibt, ist eine der Filterkammer 23 zugewandte untere Stirnseite 24 des Flanschteils 13 des Befüllelements 2 derart geneigt ausgebildet, daß die Membran 6 im aufgeblähten Zustand, in dem diese aufgrund einer Druckmittelzufuhr in einen Druckmittelraum 25 nach rechts verlagert wird, stetig und ohne scharkantige Richtungsänderungen abgestützt ist. Die Neigung der Stirnseite 24 entspricht der Neigung eines Flächenabschnitts 26 der Kammerplatte 1K.

Aus Fig. 2 läßt sich außerdem entnehmen, daß das Befüllelement 2 vollständig innerhalb eines Dichtrandes 27 verläuft, der auf der Membranplattenseite von einem gummielastischen und in der Austragsposition über die Plattenebene vorstehenden Wulst 28 der Membran 6 gebildet wird. Dennoch befindet sich das Befüllelement 2 vollständig außerhalb des eigentlichen Plattenspiegels, so daß hierdurch keine wirksame Filterfläche verlorengeht, wodurch eine höhere Filtrationsleistung erreicht wird.

In der in Fig. 1 dargestellten Entleerungsstellung der benachbarten Filterplatten 1M und 1K ist ersichtlich, daß das Filtertuch 7K der Kammerplatte 1K lediglich auf der Plattenoberkante an der Kammerplatte 1K befestigt und somit sowohl im Bereich des Trübekanals als auch im Bereich des unterhalb liegenden Filterplattenspiegels frei von der Filterplatte abhebbar ist. Aus diesem Grunde läßt sich eine Kuchenaustragsvorrichtung in Form eines zwischen benachbarten Filterplatten 1M und 1K vertikal verfahrbaren Walzenpaars, um das das Filtertuch 7K S-förmig gelegt ist, ohne weiteres bis in den Bereich des Ansatzstücks 5 verfahren, so daß das Filtertuch 7K im gesamten Bereich des Plattenspiegels scharfkantig umgelenkt wird, wodurch sich ein vollständiger Abwurf des Filterkuchens erzielen läßt. Das Filtertuch 7M der Membranplatte 1M wird nicht mit Hilfe eines derartigen Walzenpaars S-förmig umgelenkt, da erfahrungsgemäß der Filterkuchen fast ausschließlich an dem der Kammerplatte 1K zugeordneten Filtertuch 7K anhaftet. Eine Klemmbefestigung des Filtertuchs 7M mit Hilfe des Befüllelements 2 ist daher ohne Nachteile.

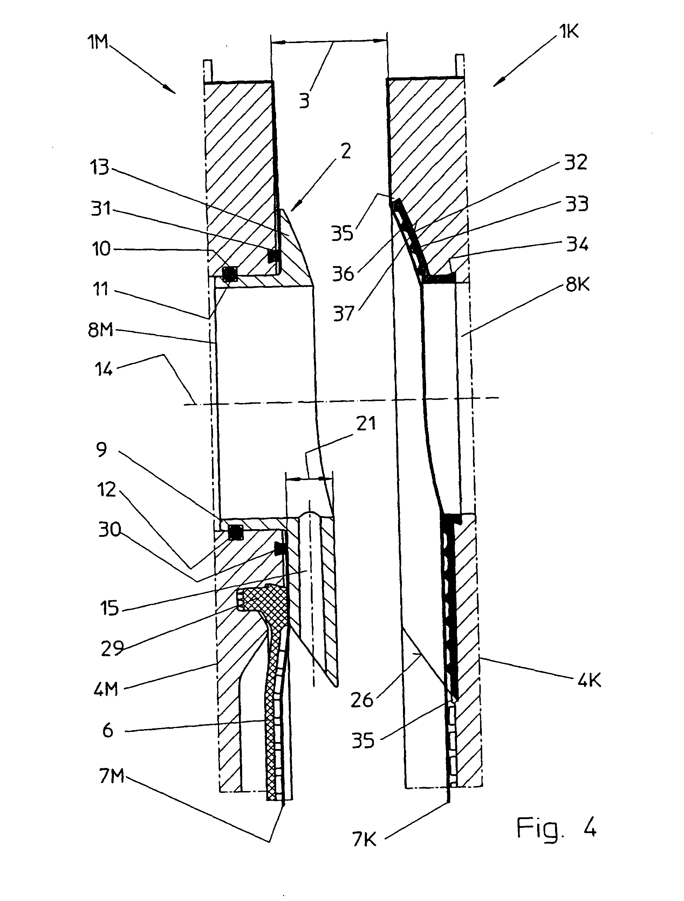

Fig. 4 zeigt als weiteres Ausführungsbeispiel einen Alternativvorschlag zu der in den Fig. 1 bis 3 gezeigten Ausführung.

Bei der in Fig. 4 dargestellten Ausführungsform wird die Membran 6' - zwecks einfacherer und kostengünstigerer Herstellung - nicht mehr das Befüllelement 2 umschließend ausgebildet.

Ein als Dichtwulst 29 ausgebildeter Außenrand der Membran 6' verläuft unterhalb der Aufnahmebohrung 8M, wo er durchgehend in eine angepaßte Nut im Plattengrundkörper eingreift.

Anstelle des nicht mehr vorhandenen Dichtwulstes 16 (Fig. 1) erfolgt die Abdichtung des Durchbruchs im Filtertuch 7M durch einen umlaufenden Dichtring 30, der in eine hinterschnittene Nut 31 eingelegt ist.

Die Kammerplatte 1K' ist im Bereich um die Durchgangsbohrung 8K mit einer muldenförmigen Aussparung 32 versehen, in welche eine elastische Manschette 33 (vorzugsweise aus Gummi) formschlüssig eingelegt ist. Die Tiefe der Aussparung 32 ist so bemessen, daß die Dicke 21 des Flanschteils 13' vorzugsweise vollständig von der Kammerplatte 1K' aufgenommen werden kann.

Die Fixierung der Manschette 33 in der Kammerplatte 1K' erfolgt im Bereich der Durchgangsbohrung 8K durch einen umlaufenden Wulst 34 sowie am Außenrand durch eine Hinterschneidung 35.

Auf der dem Befüllelement 2' zugewandten Seite ist die Manschette 33 mit prismenförmigen Dichtleisten 36 ausgebildet.

Die Höhe der Dichtleisten 36 ist so bemessen, daß die Manschette 33 beim Zusammenpressen des Filterplattenpakets eine elastische Einspannung des Befüllelements 2' erzeugt, und hierbei eventuell vorliegende Fertigungstoleranzen an der Einspannstelle ausgleicht.

Die hierbei auftretende Verformung der Dichtleiste 36 wird durch eine elastische Materialverdrängung in seitliche Richtung im Bereich der tiefer liegenden Nuten 37 kompensiert.

Diese Ausführungsform gewährleistet sowohl eine sichere Abdichtung zum Filtertuch 7K als auch eine elastische Abstützung der Befüllelemente 2' im Bereich der Einspannstelle.

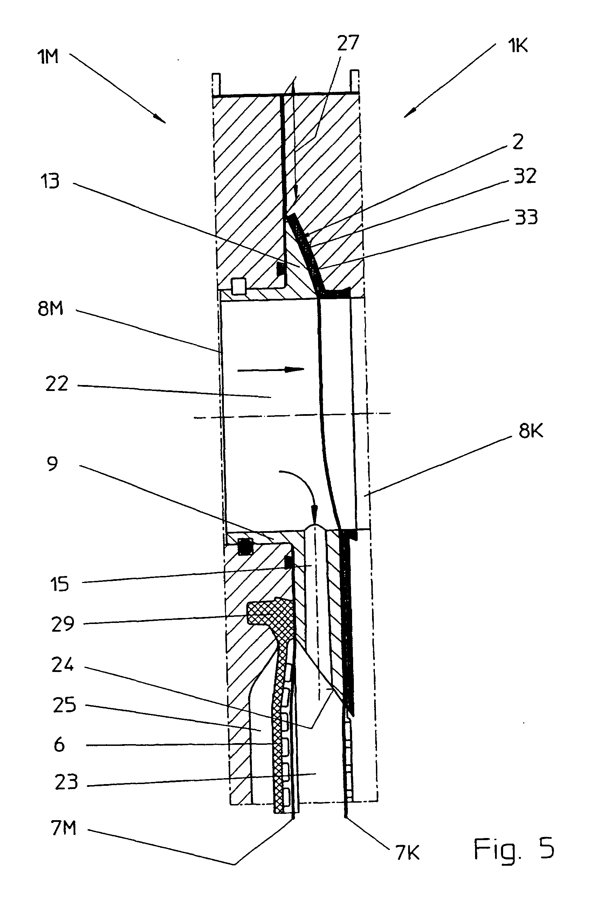

Aus Fig. 5 wird ersichtlich, wie bei dem zweiten Ausführungsbeispiel das Flanschteil 13' des Befüllelements 2 vollständig in der Ausnehmung 32 der Kammerplatte 1K' aufgenommen wird, wenn die beiden benachbarten Filterplatten 1M' und 1K' in der dort dargestellten Filtrationsstellung aneinander gepreßt sind.

Des weiteren wird ersichtlich, daß sich die Dichtleisten 36 der Manschette 33 fast vollständig verformt haben und in diesem Zustand eine elastische Vorspannung auf das Befüllelement 2' ausüben.

Aus Fig. 5 läßt sich weiterhin entnehmen, daß das Befüllelement 2' auch bei diesem Ausführungsbeispiel vollständig innerhalb des Dichtrandes 27 verläuft.

Der in diesem Bereich auf der Membranplattenseite nicht mehr vorhandene Membranwulst 28 (Fig. 2) hat keine nachteilige Auswirkung, da die im Dichtrand 27 eingeklemmten Filtertücher 7M und 7K eine ausreichende Dichtfunktion zur Plattenaußenseite übernehmen.

Die Abdichtung des Druckmittelraums 25 übernimmt bei diesem Ausführungsbeispiel der als Dichtwulst 29 ausgebildete umlaufende Außenrand der Membran 6', der im nicht zusammengepreßten Zustand die Plattenebene um ca. 1 - 3 mm überragt.

Alle übrigen Merkmale des in Fig. 1 - 3 beschriebenen ersten Ausführungsbeispiels bleiben bei der Altemativversion gemäß Fig. 4 und Fig. 5 erhalten.

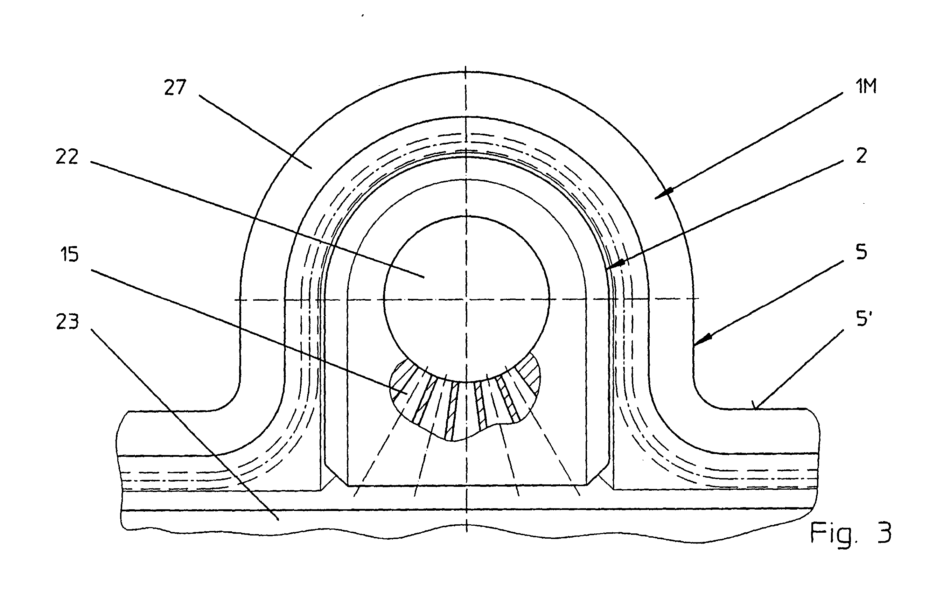

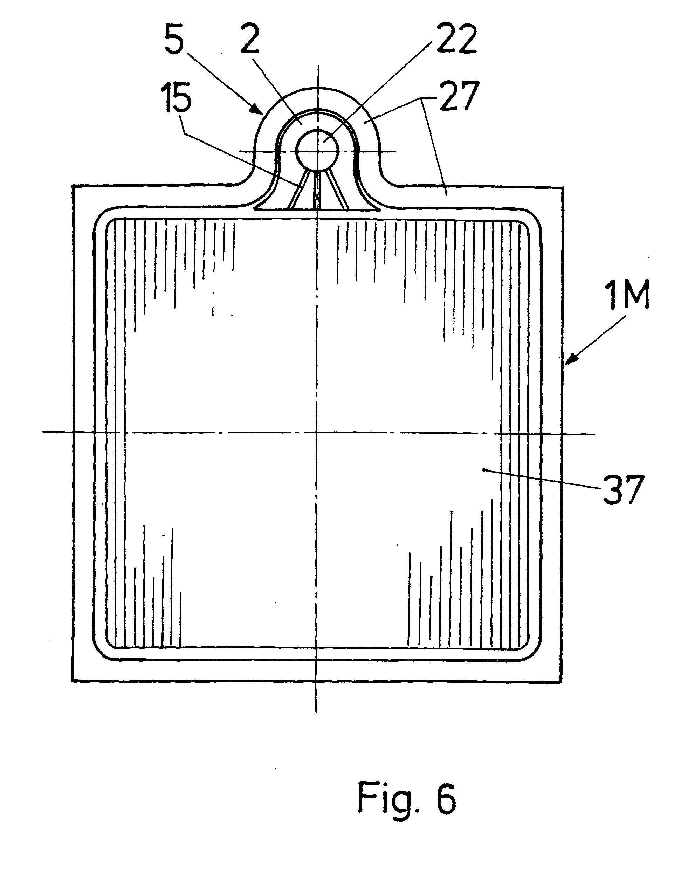

Figur 6 zeigt eine Vorderansicht der Membranplatte 1M, die im Gegensatz zu der Darstellung gemäß Figur 3 jedoch in ihrer Gesamtheit dargestellt ist. Es ist zu erkennen, daß das Befüllelement 2 innerhalb des umlaufenden Dichtrandes 27, aber außerhalb des eigentlichen Plattenspiegels 37 angeordnet ist, der als aktive Filterfläche genutzt wird, und in Figur 6 durch senkrechte Linien veranschaulicht ist. Die Verlagerung des Befüllelements 2 außerhalb des Plattenspiegels wird durch das Ansatzstück 5 ermöglicht, das ohrförmig über die ansonsten rechteckige Plattengrundfläche vorsteht. Der Plattendichtrand verläuft jedoch auch im Bereich des Ansatzstücks 5 am äußeren Rand der Membranplatte 1M und faßt das Befüllelement 2 nach oben und zur Seite hin ein. Bei geschlossenem Filterplattenpaket bilden die Durchgangsbohrungen 8M und 8K in den Filterplatten 1M und 1K einen geschlossenen durchgehenden Zulaufkanal 22, aus dem mit Hilfe der Befüllelemente 2 über die Abzweigkanäle 15 die einzelnen Filterkammern 23 mit Suspension befüllt werden können. Wie bereits zuvor ausgeführt, besteht ein Filterplattenpaket in abwechselnder Reihenfolge aus Membranplatten 1M und Kammerplatten 1K.

## Patentansprüche

1. Filterpresse zur Filtration von Suspensionen, bei der eine Mehrzahl von parallel zueinander verschiebbar angeordneten Filterplatten (1M, 1K) in einer Filtrationsstellung zu einem Paket zusammenpreßbar ist, das zwischen jeweils zwei Filterplatten (1M,1K) eine mit mindestens einem Filtertuch (7M,7K) versehene Filterkammer (23) aufweist, und bei der die Filterplatten (1M,1K) in einer Austragsstellung um einen Entleerungsabstand voneinander entfernbar sind, wobei jeder Filterkammer (23) mindestens ein Befüllelement (2) zur Zuführung von Suspension in die Filterkammer (23) zugeordnet ist, **dadurch gekennzeichnet, daß** das Befüllelement (2) an einem sich außerhalb eines Plattenspiegels erstreckenden Ansatzstück (5) und innerhalb eines an den Filterplatten (1M, 1K) umlaufenden Dichtrandes (27) angeordnet und mit einer Filterplatte (1M) verbindbar ist, wobei in der Filtrationsstellung die Befüllelemente (2) einen sich durch das Paket der Filterplatten (1M, 1 K) erstreckenden Zulaufkanal (22) für die Suspension bilden und dichtend zwischen zwei benachbarten Filterplatten (1M, 1K) eingeklemmt sind.

2. Filterpresse nach Anspruch 1, **dadurch gekennzeichnet, daß** die Filterplatte (1M) auf gegenüberliegenden Seiten jeweils ein Befüllelement (2) aufweist, das jeweils das Filtertuch (7M) abdichtend durchdringt, das einer als Membranplatte ausgebildeten Filterplatte (1M) zugeordnet ist.

3. Filterpresse nach Anspruch 1 oder 2, **dadurch gekennzeichnet, daß** das Befüllelement (2) aus einem zylinderförmigen und den Zulaufkanal (22) bildenden Zentralteil (9) und einem sich rechtwinklig zu dessen Längsachse (14) erstreckenden Flanschteil (13) besteht, das mit strahlenförmig von dem Zulaufkanal (22) ausgehenden und in die Filterkammer (23) mündenden Abzweigkanälen (15) versehen ist.

4. Filterpresse nach Anspruch 3, **dadurch gekennzeichnet, daß** das Flanschteil (13) wenigstens zum Teil in eine Aussparung (19) in der Filterplatte (1M) eingreift, mit der es verbindbar ist.

5. Filterpresse nach Anspruch 3 oder 4, **dadurch gekennzeichnet, daß** das Flanschteil (13) wenigstens zum Teil in eine Aussparung (20) in der Filterplatte (1K) eingreift, die der Filterplatte (1M) benachbart ist, mit der das Befüllelement (2) verbunden ist.

6. Filterpresse nach einem der Ansprüche 1 bis 5, **dadurch gekennzeichnet, daß** eine Aufnahmebohrung (8M) für das Befüllelement (2) in der Filterplatte (1M) mit einer Nut (10) versehen ist, die mit einer Nut (11) in dem Befüllelement (2) in dessen eingesetztem Zustand korrespondiert, wobei in eine der Nuten (10, 11) ein das Befüllelement (2) formschlüssig mit der Filterplatte (1M) verbindender Dichtungsring (12) eingesetzt ist.

7. Filterpresse nach einem der Ansprüche 1 bis 6, **dadurch gekennzeichnet, daß** eine der Filterkammer (23) zugewandte Stirnseite (24) des Flanschteils (13) derart geneigt verläuft, daß eine Membran (6) im aufgeblähten Zustand daran stetig abgestützt ist.

8. Filterpresse nach einem der Ansprüche 1 bis 7, **dadurch gekennzeichnet, daß** die Filterplatte (1K), mit der das Befüllelement (2) nicht verbunden ist, mit einer eine Durchgangsbohrung (8K) umgreifenden Nut (17) versehen ist, in die ein Dichtungsring (18) einlegbar ist, gegen den das Flanschteil (13) in der Filtrationsstellung preßbar ist.

9. Filterpresse nach einem der Ansprüche 1 bis 7, **dadurch gekennzeichnet, daß** das Zentralteil (9) des Befüllelements (2) sich außerhalb der Membran (6) befindet und die Filterplatte (1K) mit einer sich um die Durchgangsbohrung (8K) erstreckenden Manschette (33) versehen ist, die in der Filtrationsstellung des Plattenpakets von dem Flanschteil (13) des Befüllelements (2) elastisch komprimierbar ist.

10. Filterpresse nach Anspruch 9, **dadurch gekennzeichnet, daß** ein Dichtwulst (29) der Membran (6) in der Filtrationsstellung des Plattenpakets von dem Flanschteil (13) des Befüllelements (2) elastisch komprimierbar ist.

## Claims

1. A filter press for filtering suspensions, in which a plurality of filter plates (1M, 1K) which are arranged so as to be mutually displaceable in parallel are compressible to form a package in a filtering position, which package comprises between two filter plates (1M, 1K) each a filter chamber (23) which is provided with at least one filter cloth (7M, 7K), and in which the filter plates (1M, 1K) can be spaced from each other by a discharging distance in a discharge position, with each filter chamber (23) being associated with at least one filling element (2) for supplying suspension into the filter chamber (23), **characterized in that** the filling element (2) is arranged on a joining piece (5) extending outside the plate face and inside a sealing edge (27) surrounding said filter plates (1M, 1K) and is connectable with a filter plate (1M), with said filling elements (2) forming in the filtration position a suspension inlet channel (22) extending through the package of filter plates (1M, 1K) and being sealingly clamped between two adjacent filter plates (1M, 1K).

2. A filter press according to claim 1, **characterized in that** the filter plate (1M) comprises a filling element (2) on each of its opposite sides, with said filling element (2) sealingly penetrating the filter cloth (7M) which is associated with a filter plate (1M) arranged as a diaphragm plate.

3. A filter press according to claim 1 or claim 2, **characterized in that** the filling element (2) consists of a cylindrical central part (9) forming the inlet channel (22) and a flange part (13) extending at a right angle to its longitudinal axis (14), with said flange part (13) being provided with branching channels (15) extending radially from said inlet channel (22) and leading to the filter chamber (23).

4. A filter press according to claim 3, **characterized in that** the flange part (13) engages at least partially in a recess (19) in the filter plate (1M) to which it is connectable.

5. A filter press according to claim 3 or claim 4, **characterized in that** the flange part (13) engages at least partially in a recess (20) in the filter plate (1K) adjacent to said filter plate (1M) to which said filling element (2) is connected.

6. A filter press according to any of claims 1 through 5, **characterized in that** a receiving bore (8M) for the filling element (2) in the filter plate (1M) is provided with a groove (10) corresponding with a groove (11) in said filling element (2) in its inserted state, with a sealing ring (12) being inserted in one of said grooves (10, 11) which positively connects said filling element (2) with said filter plate (1M).

7. A filter press according to any of claims 1 through 6, **characterized in that** a front side (24) of said flange part (13) facing said filter chamber (23) is inclined in a manner so as to steadily support the diaphragm (6) in its inflated state.

8. A filter press according to any of claims 1 through 7, **characterized in that** the filter plate (1K) to which said filling element (2) is not connected is provided with a groove (17) surrounding a passage bore (8K), in which groove (17) a sealing ring (18) is insertable against which the flange part (13) can be pressed in the filtration position.

9. A filter press according to any of claims 1 through 7, **characterized in that** the central part (9) of the filling element (2) is located outside the diaphragm (6) and that the filter plate (1K) is provided with a sleeve (33) surrounding the passage bore (8K), with said sleeve (33) being elastically compressible by the flange part (13) of the filling element (2) in the filtration position of the plate package.

10. A filter press according to claim 9, **characterized in that** a sealing bead (29) of the diaphragm (6) is elastically compressible by the flange part (13) of the filling element (2) in the filtration position of the plate package.

## Revendications

1. Filtre-presse pour la filtration de suspensions, dans lequel une pluralité de plaques filtrantes (1M, 1K) disposées de manière coulissante parallèlement les unes aux autres peut être compressée dans une position de filtration pour former un paquet qui présente entre chaque paire de plaques filtrantes (1M, 1K) une chambre de filtre (23) pourvue d'au moins une toile de filtre (7M, 7K), et dans lequel les plaques filtrantes (1M, 1K) peuvent être éloignées les unes des autres dans une position d'extraction à une distance de vidage, chaque chambre de filtre (23) étant associée à au moins un élément de remplissage (2) destiné à amener une suspension dans la chambre de filtre (23), **caractérisé en ce que** l'élément de remplissage (2) est disposé sur un ajutage (5) s'étendant à l'extérieur d'un niveau de la plaque et à l'intérieur d'un bord d'étanchéité (27) entourant les plaques filtrantes (1M, 1K) et peut être raccordé à une plaque filtrante (1M), les éléments de remplissage (2) formant un canal d'arrivée (22) pour la suspension traversant le paquet de plaques filtrantes (1M, 1K) dans la position de filtration et étant serrés de manière étanche entre deux plaques filtrantes (1M, 1K) voisines.

2. Filtre-presse selon la revendication 1, **caractérisé en ce que** la plaque filtrante (1M) présente sur chacune de ses faces opposées un élément de remplissage (2), qui traverse de manière étanche la toile de filtre (7M) qui est associée à une plaque filtrante (1M) conformée comme une plaque à membrane.

3. Filtre-presse selon la revendication 1 ou 2, **caractérisé en ce que** l'élément de remplissage (2) se compose d'une partie centrale (9) cylindrique formant le canal d'arrivée (22) et d'une partie formant bride (13) s'étendant perpendiculairement à son axe longitudinal (14), qui est pourvue de canaux de dérivation (15) rayonnant à partir du canal d'arrivée (22) et débouchant dans la chambre de filtre (23).

4. Filtre-presse selon la revendication 3, **caractérisé en ce que** la partie formant bride (13) se met en prise au moins en partie dans un évidement (19) de la plaque filtrante (1M) avec laquelle elle peut être assemblée.

5. Filtre-presse selon la revendication 3 ou 4, **caractérisé en ce que** la partie formant bride (13) se met au moins en partie en prise dans un évidement (20) dans la plaque filtrante (1K) qui est voisine de la plaque filtrante (1M) à laquelle l'élément de remplissage (2) est relié.

6. Filtre-presse selon l'une quelconque des revendications 1 à 5, **caractérisé en ce qu'**un alésage de réception (8M) destiné à l'élément de remplissage (2) dans la plaque filtrante (1M) est pourvu d'une gorge (10) qui correspond avec une gorge (11) de l'élément de remplissage (2) lorsque celui-ci est inséré, un joint d'étanchéité (12) qui relie l'élément de remplissage (2) par engagement de la forme avec la plaque filtrante (1M) étant disposé dans l'une des gorges (10, 11).

7. Filtre-presse selon l'une quelconque des revendications 1 à 6, **caractérisé en ce qu'**une face (24) de la partie formant bride (13) tournée vers la chambre de filtre (23) est inclinée de telle sorte qu'une membrane (6) s'y appuie de manière constante lorsqu'elle est gonflée.

8. Filtre-presse selon l'une quelconque des revendications 1 à 7, **caractérisé en ce que** la plaque filtrante (1K) à laquelle l'élément de remplissage (2) n'est pas relié est pourvue d'une gorge (17) entourant un alésage traversant (8K), dans laquelle peut être introduit un joint d'étanchéité (18) contre lequel la partie formant bride (13) peut être pressée dans la position de filtration.

9. Filtre-presse selon l'une quelconque des revendications 1 à 7, **caractérisé en ce que** la partie centrale (9) de l'élément de remplissage (2) se trouve à l'extérieur de la membrane (6) et la plaque filtrante (1K) est pourvue d'un manchon (33) entourant l'alésage traversant (8K) et qui peut être compressé de manière élastique par la partie formant bride (13) de l'élément de remplissage (2) dans la position de filtration du paquet de plaques.

10. Filtre-presse selon la revendication 9, **caractérisé en ce qu'**un bourrelet d'étanchéité (29) de la membrane (6) peut être compressé de manière élastique par la partie formant bride (13) de l'élément de remplissage (2) dans la position de filtration du paquet de plaques.
